# EUROPEAN PATENT APPLICATION

(11) **EP 3 514 530 A1**
(43) Date of publication of application: **24.07.2019**
(21) Application number: 19152032.9
(22) Date of filing: 16.01.2019
(51) Int. Cl.: G01N 30/82, G01N 30/84, G01N 35/10, G01N 30/34

(54) **METHOD AND APPARATUS FOR CHROMATOGRAPH NANO-FLOW FRACTIONATOR**

(30) Priority: 22.01.2018 US 201815877233
(71) Applicant: Thermo Finnigan LLC, San Jose, CA 95134 (US)
(72) Inventor: LOPEZ FERRER, Daniel, San Jose, CA California 95134 (US); FOSTER, Greg A, San Jose, CA California 95134 (US)
(74) Representative: Boult Wade Tennant LLP

(57) **Abstract**

A nano-flow fractionator apparatus, comprises: one or more sources of mobile phase solvent; a source of auxiliary solvent; a sample injection valve; a chromatographic column having an inner diameter of less than or equal to 75 micro-meters, a column inlet end and a column outlet end; a solvent fraction delivery line comprising: an inlet end that is configured to receive eluate that is emitted from the column outlet end and an outlet end that is configured to dispense the eluate to each of a plurality of sample fraction containers; a fluid junction configured to receive the eluate that is emitted from the column outlet end and to receive a flow of the auxiliary solvent that is delivered from the source of auxiliary solvent and to deliver the eluate and the flow of auxiliary solvent to the solvent fraction delivery line.

## Description

### FIELD OF THE INVENTION

The present invention relates generally to chromatography and, more particularly, relates to multidimensional nano-flow chromatography.

### BACKGROUND OF THE INVENTION

Proteomics aims for full coverage of cellular proteomes in space and time. Since its inception, bottom-up proteomics has aimed to identify and quantify the complete proteome from cells, tissue, or whole organisms (Wilhelm, M. et al. Mass-spectrometry-based draft of the human proteome. Nature. 2014 May 29, 509(7502), 582-7). Although many advances have been made in the last 15 years, there are still three main challenges to overcome. The first is to obtain complete coverage of the proteome by identifying all the expressed proteins in a given time (Hebert, A.S., et al. The one hour yeast proteome. Mol Cell Proteomics. 2014 Jan, 13(1), 339-47). The second is working with samples of limited amounts such as clinical biopsies (Wu, X. et al. Global phosphotyrosine survey in triple-negative breast cancer reveals activation of multiple tyrosine kinase signaling pathways. Oncotarget. 2015), and the third is achieving sufficient analytical throughput (Livesay, E.A. et al. Fully automated four-column capillary LC-MS system for maximizing throughput in proteomic analyses. Anal Chem. 2008 Jan 1, 80(1), 294-302).

Chromatographic peptide separation and tandem mass spectrometric identification are pillars of modern proteomic analysis. Understanding the dynamics of the proteome requires conducting such analyses across different conditions and time points throughout the cellular life cycle. Such comprehensive studies generally require mass spectral analyses of many individual samples. Further, a primary experimental goal in the bottom-up proteomic analysis of each sample is to achieve as many peptide identifications as possible. Thus, most such studies need to be performed in a high-efficiency, high-throughput manner. To further complicate matters, the abundances of important peptides in any sample can span several orders of magnitude (Cox, J.; Mann, M. Quantitative, high-resolution proteomics for data-driven systems biology. Annu Rev Biochem. 2011, 80, 273-99.). Thus, in order to discriminate the most important proteins constituting a given cellular state requires accurate peptide measurement across a wide dynamic range of detection.

In order to achieve the required level of analytical efficiency in peptide identification and quantitation, so-called multidimensional chromatographic separations have been employed prior to mass spectral analysis. The concept of multidimensionality means that, for each sample, two or more sequential chromatographic separations are carried out, with the fractions that result from a first chromatographic separation being further fractionated in a subsequent chromatographic separation where the first and subsequent chromatographic separations are either of different types or else are carried out using different run parameters. Multidimensional chromatographic separation is usually required for bottom-up LC-MS (liquid chromatography, mass spectrometry) studies because, if only a single separation is employed, then the total number of co-eluting peptides that are presented to a mass spectrometer at any point in time during fractionation will frequently exceed the maximum number of peptides that the mass spectrometer can analyze by tandem mass spectrometry (MS/MS). MS/MS analysis generally includes selecting an ion species for fragmentation, isolating the selected ion species from other ion species, fragmenting the selected and isolated ion species to thereby generate fragment ion species and analyzing for a particular fragment ion species. In a typical scenario that only includes a single stage of chromatographic separation, there is only sufficient time to analyze the most abundant peptide ion species, a situation that may cause the failure to recognize the presence of important peptide species in low abundance.

Ideally, the two or more chromatographic separations of a multidimensional chromatographic separation are mutually "orthogonal". The concept of orthogonality, as used in this sense, means that there is little-to-no correlation between the results of a first separation and the results of a second separation. In other words, a first and a second chromatographic separation are orthogonal if analytes that remain unseparated (in terms of retention time) by the first separation are widely separated (again, in terms of retention time) by the second separation and vice-versa (when the order is reversed). Usually, in the first dimension of chromatographic separation, peptides are fractionated using either strong cation exchange chromatography, or high-pH reverse phase chromatography. Traditionally, this first dimension of chromatographic separation is performed as a conventional high-performance liquid chromatography (HPLC; formerly referred to as high-pressure liquid chromatography) procedure at relatively high flow rates of 10 µL/min - 1 mL/min), using large-diameter capillary columns having inner diameters that allow for very robust and efficient fractionation, but that require a relatively large quantity of peptides (e.g, 1-2 mg of total peptides). The various fractions produced by the first separation are temporarily stored in respective containers, such as the individual 100µL-500 µL capacity wells of a conventional multi-well plate. Subsequently, in a typical second dimension of separation, the contents of each well are subjected to a low-pH reverse-phase peptide separation, wherein the fractions resulting from the second separation are directly transferred to a mass spectrometer for analysis in accordance with conventional LC-MS procedures.

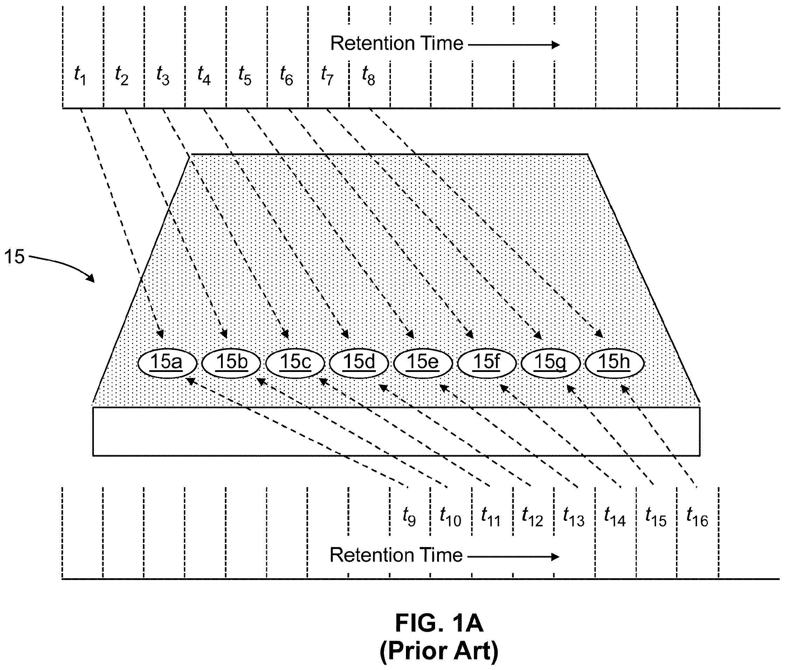

Unfortunately, the common forms of chromatographic separation that are typically employed are based in hydrophobic interactions between the solid phase and the peptides, and therefore there is never a fully "orthogonal" separation as defined above. Typically, there is at least partial correlation between the retention-time separation of various peptide analytes when separated according to a first chromatographic procedure and the retention-time separation of the same analytes when separated according to a different chromatographic procedure. To lessen the deleterious effects of such partial retention-time correlations, the concept of fraction pooling has been developed and utilized. FIG. 1A schematically illustrates the manner in which fractionation pooling is commonly employed. Specifically, FIG. 1A depicts an expanded portion (i.e., one particular row of wells) of a typical multi-well plate **15,** with the individual wells of one hypothetical row of wells labeled as wells **15a-15g.** An experimental chromatographic timeline for a first stage of separation is illustrated both above and below the depiction of the portion of the multi-well plate. The chromatographic timeline is partitioned into a total of sixteen time slices, which are labeled as *t*₁ through *t*₁₆. Each time slice of the timeline represents one fraction that elutes during the first fractionation stage; the arrows originating at each partition indicate which well receives the fraction corresponding to the respective partition.

From the schematic depiction in FIG. 1A, it can be seen that, in accordance with fraction pooling, well **15a** receives sample fractions corresponding to the time slices *t*₁ and *t*₉, well **15b** receives sample fractions corresponding to the time slices *t*₂ and *t*₁₀, well **15c** receives sample fractions corresponding to the time slices *t*₃ and *t*₁₁, etc. An operational procedure by which such fractions are pooled will be described below. Although the elution of only sixteen fractions are illustrated in FIG. 1A, a typical chromatographic separation may be divided, in accordance with an operational procedure, into many more fractions (or, possible, fewer fractions). Further, although a total of eight fraction containers (e.g., wells) are illustrated in FIG. 1A, there is no requirement for any particular number of containers or wells, other than the basic requirement that two or more such containers or wells are included. Regardless of the particular number of fractions or the particular number of containers or wells, it should be noted that the introduction of fractions into the wells or other containers repeatedly cycles among all the wells or containers. In other words, once one well has received a particular fraction, the next fraction is introduced into the next well in the series, except that after the last well (well **15h** in this example) has received a fraction, the next fraction along the timeline is introduced into the first well of the series (well **15a** in this example), thus beginning a new cycle of well filling. In the example shown in FIG. 1A, each well may receive several fractions, where the fractions within each well are separated by increments of eight time slices. For example, according to the example depicted in FIG. 1A, at the end of the first chromatographic separation, the contents of well **15a** will comprise fractions *t*₁, *t*₉, *t*₁₇, etc.; the contents of well **15b** will comprise fractions *t*₂, *t*₁₀, *t*₁₈, etc.; the contents of well **15c** will comprise fractions *t*₃, *t*₁₁, *t*₁₉, etc., and so on.

Still with reference to FIG. 1A, it should be noted that, although multiple co-eluting peptide analytes may be included in each fraction introduced into a particular well, there will be reduced interference from analytes that elute in immediately preceding and immediately subsequent fractions. For example, in the example shown in FIG. 1A, the second well (well 15b) receives the fractions *t*₂ and *t*₁₀, possibly among others. Although a first plurality of analytes may co-elute in fraction *t*₂ and a second plurality of analytes may co-elute in fraction *t*₁₀. Upon a second, different chromatographic separation of the contents of well **15b**, no interference is expected between the analytes that elute in fraction *t*₂ and the analytes that elute in fraction *t*₁₀ because these two fractions are widely separated in retention time by the first separation. Further, upon the second-stage fractionation, any potential interference from possibly more-abundant analytes in the neighboring fractions *t*₁, *t*₃, *t*₉, and *t*₁₁ will be reduced or completely eliminated. Still further, because there is less-than-perfect retention-time correlation between the first and second stages of chromatographic separation (by experimental design), the second-stage elution of the analytes of fraction *t*₂ will be more-widely separated from one another (in retention time) than in the first-stage separation and likewise for the elution of the analytes of fraction *t*₁₀. Thus, as a result of multidimensional chromatographic separation, there is greater opportunity to detect less-abundant analytes, thereby yielding a wider dynamic range of detection.

As noted above, even when multidimensional chromatographic separation is employed, the first separation is traditionally performed by conventional capillary HPLC at high flow rates (in the range of about 10 µL/min to 1 mL/min), with large column inner diameters. However, mass spectrometric analyses are highly sensitive, typically requiring only about 200 ng (nanograms) of total peptides per fraction analyses. Peptide quantities that exceed approximately 200 ng of total peptides per fraction can overload the mass spectrometer. Thus, conventional multidimensional LC-MS analyses may be inefficient for a variety of reasons. Firstly, a dilution step is a necessary part of the sample preparation procedure. After dilution and a first stage of fractionation, a lyophilization step may be required in order to separate peptide analytes from excess diluent; this lyophilization may be followed by an extended drying period in order to evaporate the diluent. As one example, a conventional 96-well plate having 100 µL-capacity wells will typically require 5-6 hours of drying time in order to fully evaporate the total solvent quantity of 9.6 mL (milliliters).

So-called nano-chromatography has proven to be particularly successful with regard to improving LC-MS efficiency. Nano-chromatography generally, if it is carried out at high pressure (>300 bars), employs fused silica capillaries having inner diameters of 50-150 µm that are filled with 2-3 µm silica particles and reversed-phase stationary phases. If the separation is carried out at lower back pressures by using functionalized monoliths instead of silica particles, then other materials such as polyether ether ketone (PEEK) can be used to hold the stationary phase. Typically, a first-stage separation utilizes mobile phase flow rates of 200 to 400 nL/min through a 75 µm inner diameter capillary, using a water/acetonitrile gradient containing 0.1% formic acid. The goal of the present inventors is to leverage this nano-flow technology to acquire rich proteome data from samples from which large quantities of proteins are available and, further, to expand the use of this technology to applications in which the sample availability is scarce, such as analyses of rare cellular subpopulations, laser microdissected samples, etc. To achieve these goals, the pre-fractionation stage needs to employ nano-flow systems (i.e., nano-chromatography employing high pressure, small column inner diameter, etc).

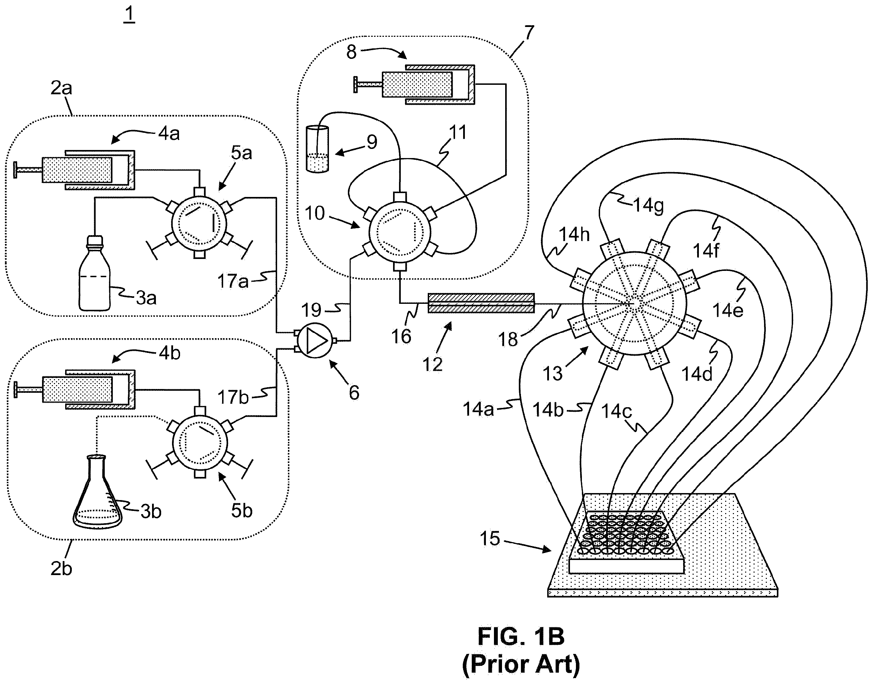

FIG. 1B is a schematic example of a known system **1** for nano-chromatographic separation of a sample into various fractions, where each fraction contains less than about one micro-gram of analyte material. In the system **1,** a sample **9** is injected into a high-pressure chromatography flow of a mobile phase solution at an injector **7** that comprises a multiport injection valve **10** and a low-pressure in injection pump **8.** The pump **8** draws a portion of the sample **9** from a sample container, such as a beaker, vial, test tube or well of a multi-well sampling plate. The pump then dispenses the sample portion into a port of the multiport injection valve **10** while the valve in a first configuration that causes the sample to be delivered into a tubing **11,** each end of which is coupled to a respective other port of the multiport injection valve **10.** The processes of drawing the portion of the sample from the container, transferring the sample to the multiport injection valve and dispensing the sample portion thereto may may be performed, in part, by a known autosampler system.

Once the sample portion has been dispensed into the tubing, the multiport injection valve **10** is switched into a second valve configuration in which the sample portion is flushed out of the tubing **11** and into an outlet tubing **16** by a pressurized flow of a mobile phase solution. Generally, the mobile solution may comprise either one of a first solvent solution **3a** (often referred to as "mobile phase A") or a second solvent solution **3b** (often referred to as "mobile phase B") or some mixture thereof. The first solvent is provided to a first solvent delivery line **17a** by a first solvent delivery sub-system **2a** that includes a first high-pressure pump **4a** and a first switching valve **5a.** Likewise, the second solvent is provided to a second solvent delivery line **17b** by a second solvent delivery sub-system **2b** that includes a second high-pressure pump **4b** and a second switching valve **5a.** The solvent delivery lines **17a, 17b** deliver the respective solvents to a gradient valve **6** that is operable to either selectively deliver one or the other of the solvent solutions or to deliver a variable mixture of the solvent solutions to a mobile phase delivery line that transfers the chosen solution or chosen solution mixture to another port of the multiport injection valve **10** of the injector **7.**

When the multiport injection valve **10** is in its second valve configuration, the high-pressure flow of solvent or mixed solvents, which comprises a mobile phase for purposes of chromatography, flows into the tubing **11** at which it mixes with the sample portion contained therein and flushes the sample portion out of the tubing **11** and into an outlet tubing **16.** The outlet tubing **16** delivers the mobile phase and dissolved sample to an inlet end of a nano-flow chromatographic column **12** as described above at a flow rate in the range of 100 nL per minute to 2 µL per minute. Within the nano-flow chromatographic column **12,** various chemical constituents of the sample portion, some of which may be analytes of interest, are variably partitioned between the flowing mobile phase and a stationary phase of the column, depending on various physical and chemical properties of the stationary phase and various chemical properties of the chemical constituents. Generally, under the flow of a controlled variable composition of the mobile phase, as controlled by variable proportioning of the flow of the mobile phase A and mobile phase B solvents by the gradient valve **6,** different chemical constituents will be retained within the nano-flow chromatographic column **12** for different respective time periods (retention times), after which they elute from an outlet end of the column. Accordingly, the sample portion is separated into different chemical fractions within the nano-flow chromatographic column **12,** with different fractions comprising a different respective subset of the sample's chemical constituents.

In the system **1** (FIG. IB), the different fractions that elute from the nano-flow chromatographic column **12** are sequentially delivered to column outlet line **18** which sequentially transfers the fractions to a distribution valve **13.** The distribution valve **13** comprises an inlet port to which the outlet line is coupled as well as a plurality of outlet ports, each such outlet port coupled to a different individual fraction delivery line. For example, the distribution valve **13** of the system **1** depicted in FIG. 1B comprises a total of eight outlet ports, each of which is coupled to a respective one of the eight fraction delivery lines, **14a-14h.** Each fraction delivery line directs one or more fractions, one fraction at a time, to a respective container, such as a vial or test tube, each such container comprising a volume of, preferably, not greater than 100 µL. In the example illustrated in FIG. 1B, each such container is an individual well of a multi-well plate **15.** In operation of the system **1,** the distribution valve **13** delivers eluate to only one fraction delivery line (and thus one container) at a time but is repeatedly re-configured so as to sequentially re-direct the eluate delivery to a next-in-sequence one of the fraction delivery lines. The repeated valve configuration, which may occur at preprogrammed equal or non-equal time increments, is performed to as to cycle the eluate delivery through all of the fraction delivery lines, **14a-14h.** Thus, each one of the recipient containers at the outlet ends of the fraction delivery lines, receives one fraction at a time, where each particular fraction may be defined by a particular time slice during the course of a sample fractionation.

In operation of the system **1,** the eluate delivery cycles through each of the fraction delivery lines, **14a-14h** in turn. For example, as shown, a set of eight different fractions sequentially eluting fractions may be respectively delivered to the fraction delivery lines in the sequence: **14a, 14b, 14c, 14d, 14e, 14f ,14g** and **14h.** Subsequently, the distribution valve **13** is re-configured to deliver a next fraction to line **14a** and the full cycle is repeated. In this manner, the eluting fractions are pooled as schematically depicted in FIG. 1A and in the manner described with reference to that figure. As may be observed from FIG. 1B, the fraction delivery lines, **14a-14h** of the apparatus **1** dispense fractions of a single sample to the wells of one row of a multi-well plate **15.** Once the first-stage nano-chromatographic fractionation of a first sample is complete, either the multi-well plate **15** or the delivery lines, **14a-14h** or both may be re-positioned such that the fractions generated by first-stage nano-chromatographic fractionation of a different sample are distributed, in the fashion described above, to the wells of a second, different row of the multi-well plate **15.** After first-stage nano-chromatographic fractionation of a plurality of samples has been completed in this fashion, the contents of the wells of the multi-well plate **15** may be delivered to an LC-MS system of which the chromatographic system is configured for a second stage of nano-chromatography performed n accordance with a different chromatographic technique.

Fractionation collection at nanoliter regimes is very challenging due to surface tension on the collection probe/capillary that prevents droplets from exiting the probe when fractions are dispensed to containers, such as the wells **15a-15h** depicted in FIG. 1. The apparatus **1** depicted in FIG. 1B is able to at least partially overcome this challenge by delivering multiple fractions in succession to each individual well through a respective one of the fraction delivery lines, **14a-14h.** By this means, droplets of earlier-delivered fractions are flushed out of the outlet end of each fraction delivery line by the subsequent flow of later-delivered fractions. However, the provision of at least one additional precision moving part, i.e., the distribution valve **13,** as well as the provision of additional fraction transfer lines within the system **1** may lead to other disadvantages, in that the additional components may, in some circumstances, render the overall system more fragile and more prone to failure than would be the case in the absence of these additional components.

### SUMMARY

The inventors have developed a new nano-flow fractionator apparatus that assists droplet formation and focusing during fraction delivery to a collection container at fraction delivery flow rates of less than 10 µL per minute and total peptide content ranging from 200 ng per delivered fraction to 1 µg per delivered fraction. The novel apparatus employs an auxiliary flow of an auxiliary fluid that confines the droplets that emerge from an outlet end of a fraction delivery tube that transfers fractionated peptides eluted from a nano-chromatographic column to a collection container. The auxiliary fluid comprises a mobile phase fluid composition or a mixture of mobile phase compositions that is mixed with the flow of sample-fraction fluid at an auxiliary flow rate ranging from twice the sample-fraction flow rate to five times the sample-fraction flow rate. The auxiliary flow of auxiliary fluid may be provided by an auxiliary low-pressure pump, by introduction of compressed air or by diversion of a portion of a mobile phase fluid by means of a bypass line that transfers the diverted mobile phase portion to an outlet end of a single fraction delivery line from a mobile phase delivery line that delivers mobile phases to the nano-flow column. The fraction collector may comprise a plurality of containers, such as the wells of a multi-well plate, that receive the various eluting fractions from the single fraction delivery line. A movable sample table or a movable robotic arm that supports the fraction delivery line periodically moves the outlet end of the fraction delivery line relative to the plurality of containers, under automatic control, such the sequentially eluting fractions are delivered to the different containers in a cyclical fashion, thereby pooling a respective subset of the fractions within each container. The novel apparatus is capable of lossless fractionation of low sample volumes (1 µg and less). Further, the simplicity of the apparatus allows end-users to fractionate extraordinary low amounts of peptides in an automated fashion and without supervision.

In a first aspect in accordance with the present teachings, a nano-flow fractionator apparatus is disclosed, the apparatus comprising: one or more sources of mobile phase solvent; a source of auxiliary solvent; a sample injection valve; a chromatographic column having an inner diameter of less than 75 micro-meters (µm) and having a column inlet end and a column outlet end; a first fluidic line coupled between the one or more sources of mobile phase solvent and an inlet port of the sample injection valve; a second fluidic line coupled between an outlet port of the sample injection valve and the chromatographic column; a solvent fraction delivery line comprising: an inlet end that is configured to receive eluate that is emitted from the column outlet end and an outlet end that is configured to dispense the eluate to each of a plurality of sample fraction containers; and a fluid junction configured to receive the eluate that is emitted from the column outlet end and to receive a flow of the auxiliary solvent that is delivered from the source of auxiliary solvent and to deliver the eluate and the flow of auxiliary solvent to the solvent fraction delivery line.

In various embodiments, the one or more sources of mobile phase solvent may comprise a single source of mobile phase. In various embodiments, the source of auxiliary solvent may draw the auxiliary solvent from one or more containers containing mobile phase solvent(s) of the one or more sources of mobile phase solvent. In various embodiments, the apparatus may further comprise a robotic arm configured to move the outlet end of the solvent fraction delivery line to a receiving portion of each of the sample fraction containers. In various other embodiments, the apparatus may comprise a moveable sample table upon which the plurality of sample fraction containers is supported, wherein the moveable table is configured to position a receiving portion of each of the sample fraction containers at the outlet end of the solvent fraction delivery line. If the sample fraction containers are wells of a multi-well plate, the receiving portion of each well is just a volume of space above and adjacent to the well. If the sample fraction containers are test tubes, the receiving portion is the open end of the test tube.

In various embodiments, the fluid junction may comprise a tee-junction that is configured to mix the eluate with a flow of the auxiliary solvent thereat. In various other embodiments, the fluid junction may comprise a penetration of an auxiliary transfer line through a sleeve of the solvent fraction delivery line and into a cylindrical annular conduit of the solvent fraction delivery line. In these and other embodiments, the auxiliary solvent may be emitted as a sheath flow that at least partially surrounds the eluate emerging from the outlet end of the solvent fraction delivery line. The source of auxiliary solvent may comprise a pump, such as a syringe pump, and a multiport switching valve. Alternatively, the source of auxiliary solvent may comprise a source of pressurized gas or air, such as without limitation a gas cylinder, an air compressor or a "house gas" nozzle that pushes the auxiliary solvent out of a container at a regulated flow rate.

### BRIEF DESCRIPTION OF THE DRAWINGS

The above noted and various other aspects of the present invention will become apparent from the following description which is given by way of example only and with reference to the accompanying drawings, not necessarily drawn to scale, in which:
FIG. 1A is a schematic depiction of fraction pooling within multiple wells of a multi-well collection plate during the course of a chromatographic separation;
FIG. 1B is a schematic depiction of a known system for nano-chromatographic separation of a sample into various fractions with fraction pooling;
FIG. 2A is a schematic depiction of a first chromatographic nano-flow fractionator in accordance with the present teachings;
FIG. 2B is a schematic depiction of a second chromatographic nano-flow fractionator in accordance with the present teachings;
FIG. 2C is a schematic depiction of a third chromatographic nano-flow fractionator in accordance with the present teachings; and
FIG. 3 is a schematic depiction of the end of a fraction delivery tube in accordance with the present teachings.

### DETAILED DESCRIPTION

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. To fully appreciate the features of the present invention in greater detail, please refer to FIGS. 1A, 1B, 2A-2C and 3, in which like reference numbers refer to like elements, in conjunction with the following discussion. It should be noted that all instances of the word "line" when used in reference to the movement of or in conjunction with a fluid (e.g., "delivery line". "transfer line", "outlet line", etc.) are to be understood as referring, in a general sense, to a conduit that transfers fluid from one location to another, such as a tube or pipe or tubing or the like, without implication of or restriction to any particular material or materials, properties, size, shape, length, or form.

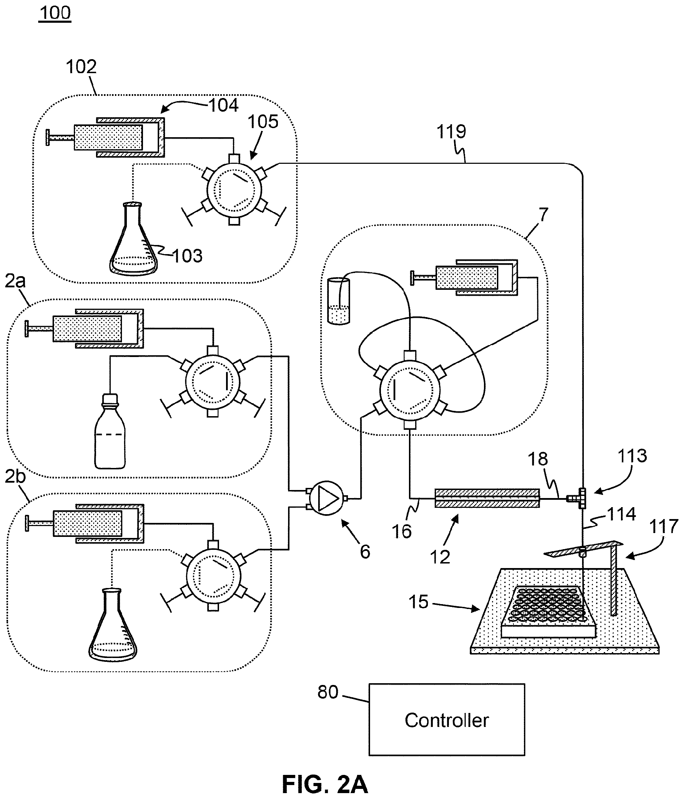

FIG. 2A is a schematic depiction of a chromatography nanoflow fractionator system **100** in accordance with the present teachings. In similarity to the system 1 that is illustrated in FIG. 1B, the system **100** comprises a first solvent delivery sub-system **2a,** a second solvent delivery sub-system **2b,** an injector **7,** a chromatographic column **12** that receives a sample portion dissolved in a mobile phase from the injector **7** and a gradient valve **6** that is fluidically coupled between the injector **7** and the two solvent delivery sub-systems **2a, 2b.** Unlike the known system **1,** however, the column outlet line **18** of the system **100** does not deliver eluate fractions to a multiport distribution valve but, instead delivers the eluate fractions to a fluid junction **113** that combines the eluate with an auxiliary flow of an additional solvent **103** from an auxiliary solvent source **102.** As depicted in FIG. 2A, the auxiliary solvent source **102** comprises an additional pump **104** and an additional switching valve **105.** An auxiliary transfer line **119** delivers the auxiliary flow of an additional solvent to the fluid junction **113** at which it combines with the eluate from the chromatographic column **12** as transferred by column outlet line **18.** The additional pump **104** is a low-pressure pump and, thus, the flow of additional solvent through the auxiliary transfer line **119** occurs at approximately atmospheric pressure. This is in contrast to the high-pressure flow (e.g., generally 100-350 bars pressure) within the fluidic lines that couple the first and second solvent delivery sub-systems **2a, 2b** to the gradient valve **6** and to the multiport injection valve **10** and within the outlet tubing **16** that couples the multiport injection valve **10** to the nano-flow chromatographic column **12.** The post column lines (outlet line **18** and a fraction delivery line **114**) may comprise silica or PEEK tubing that is of small diameter (approximately 10µm inner diameter) to avoid diffusion. The post-column lines and the transfer line carry little to no back pressure (less than 150 bars) between the outlet end of the column **12** and the collection plate **15,** depending on the lengths and inner diameters of these lines. In any event the pressure within the post-column lines and the transfer lines is significantly less than in the pre-column line **16.**

In the system 100 (FIG. 2A), the combined eluate fractions and auxiliary solvent flow are transferred from the fluid junction **113** to a series of fraction collection containers (exemplified, in this depiction, by multi-well plate **15**) by the single fraction delivery line **114.** As will be described in greater detail below, operation of the system **100** causes the various eluate fractions to be delivered to the different fraction containers in cyclical sequential fashion as described above. However, because the system comprises only a single fraction delivery line **114** (as opposed to the multiple fraction delivery lines of the system **1**), the receiving containers are changed by means of mechanical relative movement between the containers and the outlet end of the fraction delivery line **114.** In the system **100** illustrated in FIG. 2A, this relative movement is effected by repositioning of the outlet end of the fraction delivery line **114** (assumed to comprise a flexible tubing) by a robotic arm structure **117** that is mechanically coupled to the fraction delivery line **114.** Alternatively, the fraction delivery line **114** may remain stationary while the containers are repositioned between transfer of separate fractions. In the system shown in FIG. 2A, this repositioning may be carried out by lateral movement of a motorized moveable support table (not specifically illustrated) that supports the multi-well plate **15.** An electronic controller **80** comprises electronic connections to the valves, pumps and robotic arm (and/or motorized moveable support table) and comprises program instructions that synchronize the operations of the pumps with the configurations of the valves for the purposes of providing appropriate mobile phase compositions to the nano-flow column, of controlling the injection of sample into the injection valve and for controlling the positioning of the fraction delivery line relative to the multiple fraction collection containers, either by control of the robotic arm or of a motorized moveable support table. If sample portions are provided by an autosampler apparatus (not specifically shown in FIG. 2A), then the controller **80** may also comprise a communication link to the autosampler apparatus that causes synchronization of the operation of the injector with the delivery of sample portions to the injector by the autosampler apparatus.

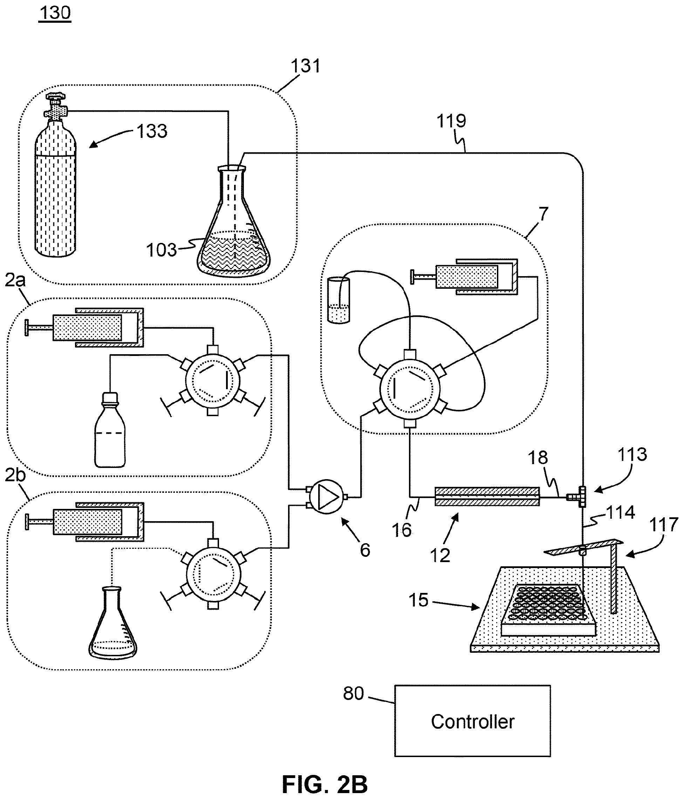

FIG. 2B is a schematic depiction of a second chromatographic nano-flow fractionator system **130** in accordance with the present teachings. The system **130** depicted in FIG. 2B is similar, in most respects, to the system **100** depicted in FIG. 2A except that the flow of additional solvent within the auxiliary transfer line **119** is propelled by a pressurized or flow-regulated gas source **133** instead of by a dedicated pump within the auxiliary solvent source **102.** Although the gas source **133** is schematically indicated as a gas cylinder in FIG. 2B, the gas source **133** may comprise any alternative gas source, such as an air compressor. The gas source **133** may be located remotely from the location of the system **130** in which case the flow of gas may be fluidically coupled to the auxiliary solvent source **102** via existing infrastructure (e.g., "house gas"). As previously described, the flow of additional solvent through the auxiliary transfer line **119** occurs at approximately atmospheric pressure.

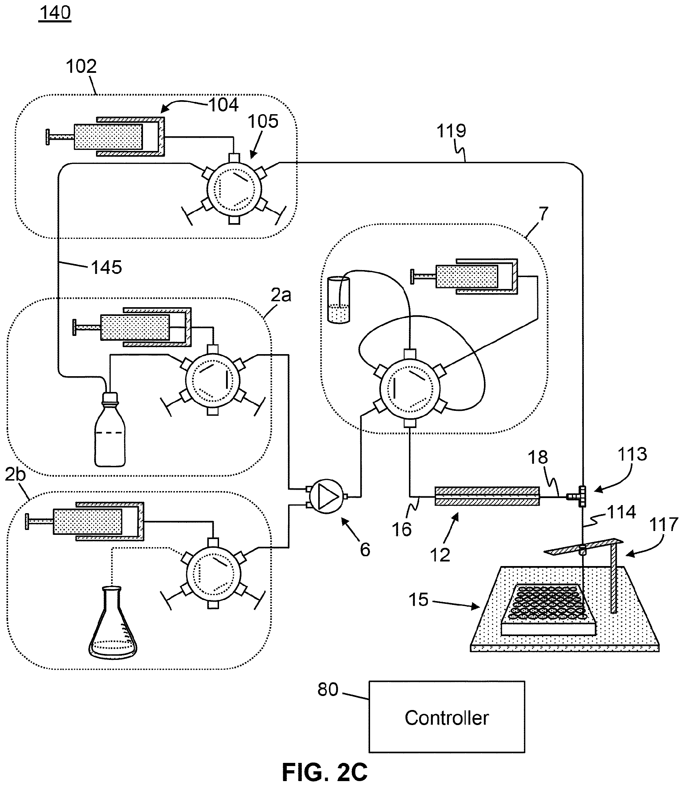

FIG. 2C is a schematic depiction of a second chromatographic nano-flow fractionator system **140** in accordance with the present teachings. The system **140** depicted in FIG. 2C is similar, in most respects, to the system **100** depicted in FIG. 2A except that the flow of additional solvent within the auxiliary transfer line **119** is provided from one or more existing solvent reservoirs (e.g., from either the mobile phase A reservoir of the first solvent delivery sub-system **2a,** the mobile phase B reservoir of the second solvent delivery sub-system **2b,** or a combination of the two reservoirs) via auxiliary solvent supply line **145** as shown. The flow of the auxiliary solvent supply line **145** is at approximately atmospheric pressure, in contrast to the high-pressure flow of mobile phases within the fluid lines that couple the first and second solvent delivery sub-systems **2a, 2b** to the gradient valve **6** and to the multiport injection valve **10.**

In all of the herein-described chromatographic nano-flow fractionator systems, the fractionated sample fluid flowing within the column outlet line **18** and the fraction delivery line **114** is, after having exited the nano-flow chromatographic column **12,** at approximately atmospheric pressure. Likewise, the auxiliary fluid that flows within the auxiliary transfer line **119** is similarly at near atmospheric pressure. The fractionated sample fluid and the auxiliary fluid mix at or downstream from the fluid junction **113** with the flow rate of the auxiliary fluid being from two-times to five-times greater than the flow rate of the fractionated sample fluid. The additional flow of the auxiliary fluid overcomes the surface tension at the end of fraction delivery line **114** that would otherwise delay or prevent dispensing of the fractionated sample fluid into the containers **15.**

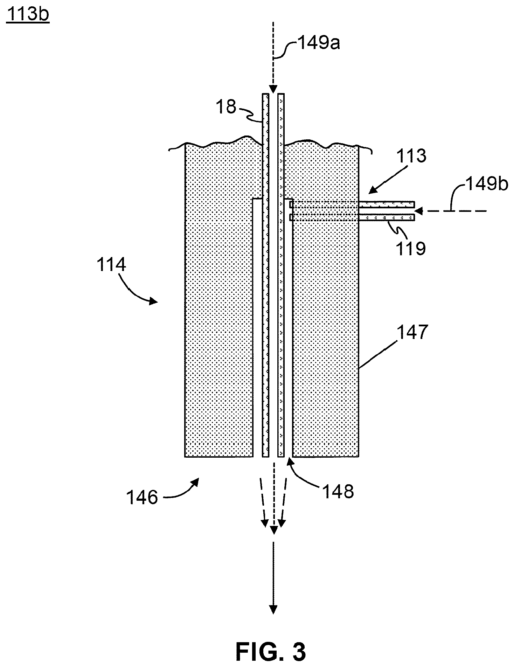

In many instances, the fluid junction **113** may comprise a simple tee-junction. Alternatively, however, the fluid junction together with the fraction delivery line may comprise a specialized structure, as illustrated in FIG. 3, that causes the emerging auxiliary fluid to exit the end of the fraction delivery line as a sheath flow that coaxially surrounds the emerging flow of the fraction delivery line. FIG. 3 illustrates such a specialized structure in which the fraction delivery line **114** comprises two fluid conduits, the first of which is an extension of the column outlet line **18** that carries the fractionated sample fluid **149a** and the second of which is an annular cylindrical gap **148** that surrounds the extension of the column outlet line **18.** The annular cylindrical gap **148** is disposed between the extension of the column outlet line **18** and an outer sleeve tube **147.** The auxiliary transfer line **119** passes through the outer sleeve tube **147** at the fluid junction **113** at a point upstream from the outlet end **146** of the fraction delivery line **114,** at which point the auxiliary fluid **149b** is delivered into the annular cylindrical gap **148.** The resulting co-axial flow of the two fluids through a portion of the fraction delivery line **114** causes the auxiliary fluid to exit the fraction delivery line in the form of a sheath flow that co-axially surrounds any droplets of sample fluid that may form at the outlet end **146** and that urges said droplets to detach from the tip.

An improved chromatograph fractionator for general and multidimensional nano-flow chromatography has been disclosed. The discussion included in this application is intended to serve as a basic description. The present invention is not intended to be limited in scope by the specific embodiments described herein, which are intended as single illustrations of individual aspects of the invention, and functionally equivalent methods and components are within the scope of the invention. Indeed, various modifications of the invention, in addition to those shown and described herein will become apparent to those skilled in the art from the foregoing description and accompanying drawings. Such modifications are intended to fall within the scope of the appended claims.

## Claims

1. A nano-flow fractionator apparatus, comprising:
one or more sources of mobile phase solvent;
a source of auxiliary solvent;
a sample injection valve;
a chromatographic column having an inner diameter of less than 75 micro-meters (µm) and having a column inlet end and a column outlet end;
a first fluidic line coupled between the one or more sources of mobile phase solvent and an inlet port of the sample injection valve;
a second fluidic line coupled between an outlet port of the sample injection valve and the chromatographic column;
a solvent fraction delivery line comprising:
an inlet end that is configured to receive eluate that is emitted from the column outlet end; and
an outlet end that is configured to dispense the eluate to each of a plurality of sample fraction containers; and
a fluid junction configured to receive the eluate that is emitted from the column outlet end and to receive a flow of the auxiliary solvent that is delivered from the source of auxiliary solvent and to deliver the eluate and the flow of auxiliary solvent to the solvent fraction delivery line.

2. A nano-flow fractionator apparatus as recited in claim 1, further comprising a robotic arm configured to move the outlet end of the solvent fraction delivery line to a receiving portion of each of the sample fraction containers.

3. A nano-flow fractionator apparatus as recited in claim 1, further comprising a moveable sample table upon which the plurality of sample fraction containers is supported, the moveable table configured to position a receiving portion of each of the sample fraction containers at the outlet end of the solvent fraction delivery line.

4. A nano-flow fractionator apparatus as recited in claim 1, wherein the fluid junction comprises a tee-junction that is configured to mix the eluate with a flow of the auxiliary solvent thereat.

5. A nano-flow fractionator apparatus as recited in claim 1, wherein the fluid junction comprises a penetration of an auxiliary transfer line through a sleeve of the solvent fraction delivery line and into a cylindrical annular conduit of the of the solvent fraction delivery line.

6. A nano-flow fractionator apparatus as recited in claim 1, wherein the solvent fraction delivery line is configured to outlet the flow of the auxiliary solvent as a sheath flow that at least partially surrounds the eluate emerging from the outlet end of the solvent fraction delivery line.

7. A nano-flow fractionator apparatus as recited in claim 1, wherein:
the source of auxiliary solvent comprises a fluid pump;
the one or more sources of mobile phase solvent comprise at least one container of mobile phase solvent; and
the fluid pump of the source of auxiliary solvent is configured to draw the auxiliary solvent from the at least one container of mobile phase solvent.

8. A nano-flow fractionator apparatus as recited in claim 1, wherein the source of auxiliary solvent comprises:
a container of the auxiliary solvent;
a switching valve comprising an inlet port that is configured to draw the auxiliary solvent from the container of the auxiliary solvent; and
a syringe pump fluidically coupled to another port of the switching valve.

9. A nano-flow fractionator apparatus as recited in claim 1, wherein the source of auxiliary solvent comprises:
a container of the auxiliary solvent; and
a source of pressurized gas or air that is fluidically coupled to the container of the auxiliary solvent.

10. A nano-flow fractionator apparatus as recited in claim 1, wherein the one or more sources of mobile phase solvents comprise one or more pumps and the one or more pumps are configured to pump the sample and the mobile phase solvents through the chromatographic column at a flow rate in the range of 100 nanoliters (nL) per minute to 2 µL per minute.
